# EUROPEAN PATENT APPLICATION

(11) **EP 2 216 985 A1**
(43) Date of publication of application: **11.08.2010**
(21) Application number: 09165358.4
(22) Date of filing: 13.07.2009
(51) Int. Cl.: H04N 5/225, F16C 11/06

(54) **Ball joint structure**

(30) Priority: 04.02.2009 TW 98103581
(71) Applicant: AVerMedia Information, Inc., Chung-Ho City, Taipei Hsien (TW)
(72) Inventor: Hsia, Ming-Hung, Taipei Hsien (TW); Lee, Chen-Cheng, Taipei Hsien (TW); Wang, Yo-Jung, Taipei Hsien (TW)
(74) Representative: Lang, Christian

(57) **Abstract**

A ball joint structure is disclosed, which includes a socket with a containing opening, a ball disposed in the socket, a cover disposed at the containing opening, a protrusion disposed at an outer surface of the ball, a concavity disposed at an inner surface of the socket, and plural adjustable elastic screws screwed on the socket. The protrusion is moved in the concavity when the ball is rotated in the socket. The ball is gripped in the socket with a force provided by the adjustable elastic screws.

## Description

### RELATED APPLICATIONS

This application claims priority of Taiwan Application Serial Number 98103581, filed February 4, 2009, which is herein incorporated by reference.

### BACKGROUND

### Field of Invention

The present invention relates to a connecting structure. More particularly, the present invention relates to a ball joint structure.

### Description of Related Art

A document projector instantly projects the image of an object onto a screen and does not need to make an image or a document file. The object placed on the shooting zone of a projector camera may be captured and projected on the screen instantly in the document projector. Thus, the document projector is a convenient aid for showing the current status of the object instantaneously.

The degree of freedom for operating the document projector is provided by a rotating shaft or a hinge in a conventional document projector. However, there may be more than one rotating shaft or hinge arranged in the conventional document projector to provide multiple degrees of freedom, and that would take a lot of space in the document projector and would be expensive.

A ball joint structure is one of multi degree of freedom operating mechanisms. The ball joint structure includes a socket and a ball. The ball joint structure can provide three degrees of freedom when the ball joint structure is forced and rotated. The wire of a conventional electronic device with the ball joint structure is usually exposed and cannot be well protected, thereby affecting the appearance of the electronic device. The conventional ball joint structure may further include a spring, an O-ring, a bearing, or a clamping mechanism to increase a friction force between the socket and the ball to enhance a loading of the ball joint structure.

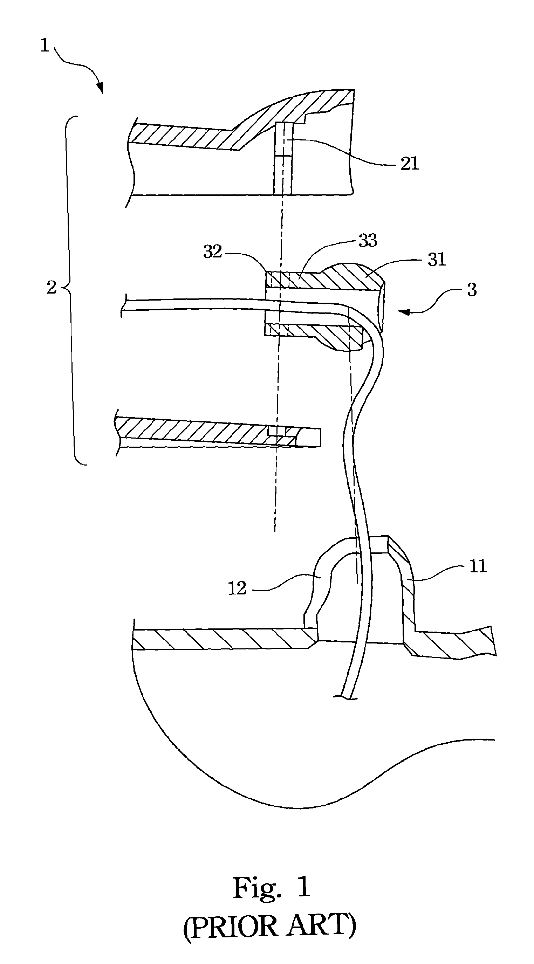

Refer to Fig. 1. Fig. 1 illustrates a schematic diagram of a conventional antenna socket of Taiwan Patent 539361. A piece 21 of an antenna device 2 is coupled to a slot 32 of ball 3 to combine the antenna device 2 with the ball 3. A host 1 has a ball socket 11, and the ball 3 is disposed in the ball socket 11. The ball socket 11 has an opening 12, and a cylinder 33 of the ball 3 can be rotated in the opening 12 to adjust an angle of the antenna device 2. The ball 3 has a passage, and a wire passes the passage.

### SUMMARY

An embodiment of the invention provides a ball joint structure, which includes a socket, a ball disposed in the socket, a cover, and plural adjustable elastic screws. The socket includes a first socket portion with a containing opening, and a second socket portion coupled to the first socket portion. The ball includes a first ball portion, and a second ball portion coupled to the first ball portion. The cover is disposed at the containing opening and touches the ball. The adjustable elastic screws are screwed on the socket, wherein the ball is gripped in the socket with a force provided by the adjustable elastic screws.

Another embodiment of the invention provides a ball joint structure, which includes a socket, a ball disposed in the socket, plural adjustable elastic screws screwed on the socket, and a stop mechanism. The ball is gripped in the socket by the force provided by the adjustable elastic screws. The stop mechanism includes a concavity disposed on the inner surface of the socket, and a protrusion disposed on an outer surface of the ball. The protrusion is moved in the concavity when the ball is rotated in the socket.

Another embodiment of the invention provides a ball joint structure, which includes a socket with a containing opening, a ball disposed in the socket, a cover disposed at the containing opening, a protrusion disposed at an outer surface of the ball, a concavity disposed at an inner surface of the socket, and plural adjustable elastic screws screwed on the socket. The protrusion is moved in the concavity when the ball is rotated in the socket. The ball is gripped in the socket with a force provided by the adjustable elastic screws.

It is to be understood that both the foregoing general description and the following detailed description are by examples, and are intended to provide further explanation of the invention as claimed.

### BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention. In the drawings,
Fig. 1 illustrates a schematic diagram of a conventional antenna socket;
Fig. 2 illustrates an oblique diagram of a first embodiment of a ball joint structure of the invention;
Fig. 3 illustrates an explosion diagram of the ball joint structure of the first embodiment of the invention;
Fig. 4 illustrates an explosion diagram of a second embodiment of the ball joint structure of the invention;
Fig. 5 illustrates a sectional diagram of the second embodiment of the ball joint structure of the invention;
Fig. 6A and Fig. 6B illustrate schematic diagrams of the stop mechanism of the ball joint structure in Fig. 5;
Fig. 7 illustrates a top view diagram of the concavity of the stop mechanism in Fig. 6A; and
Fig. 8A and Fig. 8B illustrate sectional diagrams of different operating states of a third embodiment of the ball joint structure of the invention.

### DESCRIPTION OF THE PREFERRED EMBODIMENTS

Reference will now be made in detail to the present preferred embodiments of the invention, examples of which are illustrated in the accompanying drawings. Wherever possible, the same reference numbers are used in the drawings and the description to refer to the same or like parts.

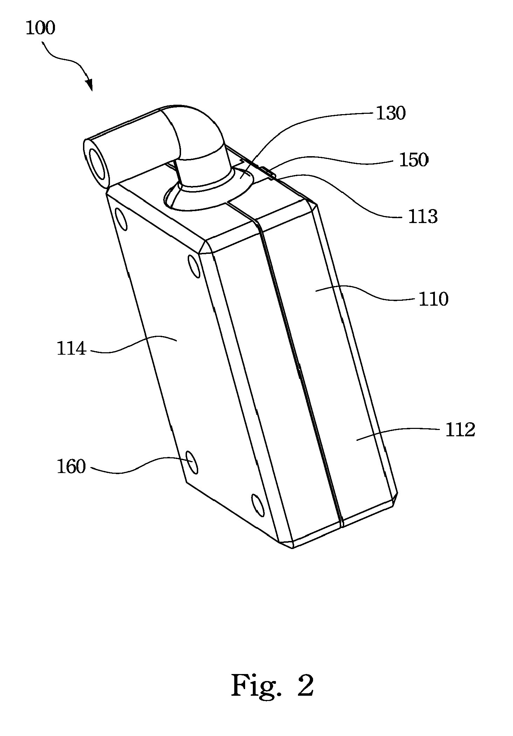

Refer to Fig. 2. Fig. 2 illustrates an oblique diagram of a first embodiment of a ball joint structure of the invention. The ball joint structure 100 includes a socket 110, a ball 130, a cover 150, and plural adjustable elastic screws 160. The socket 110 includes a first socket portion 112 and a second socket portion 114. The first socket portion 112 is coupled to the second socket portion 114 to form the socket 110. The ball 130 is disposed in the socket 110. The first socket portion 112 has a containing opening 113. The cover 150 is disposed on the containing opening 113. The adjustable elastic screws 160 are screwed on the socket 110, and the ball 130 is gripped in the socket 110 with a force provided by the adjustable elastic screws 160.

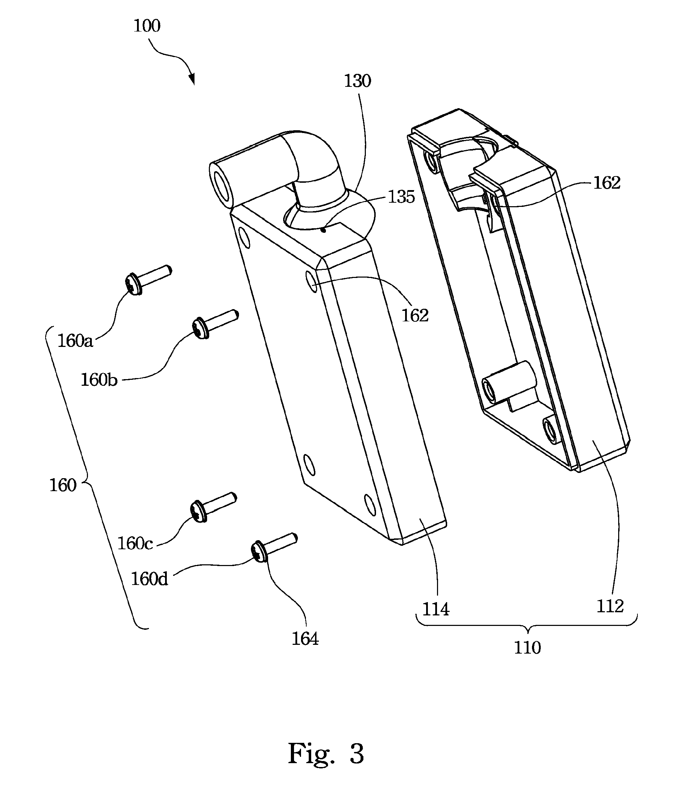

Refer to Fig. 3. Fig. 3 illustrates an explosion diagram of the ball joint structure of the first embodiment of the invention. The first socket portion 112 and the second socket portion 114 of the socket 110 have plural screw holes 162, and the adjustable elastic screws 160 can be screwed on the socket 110 to hold the ball 130 in the socket 110. There is a slight interference between the ball 130 and the socket 110, thus there is no related movement between the ball 130 and the socket 110 when there is no external force applied to the ball joint structure 100.

The adjustable elastic screws 160 are screwed on the socket 110 equally. For example, the shape of the socket 110 is substantially rectangular, and the adjustable elastic screws 160a, 160b, 160c and 160d are screwed on the corners of the socket 110. The ball 130 has a geometric center 135, and an axis of the adjustable elastic screws 160a and 160b passes through the geometric center 135. The number and the arrangement of the adjustable elastic screws 160 may have different variances, as long as the force provided from the adjustable elastic screws 160 to the socket 110 and the ball 130 is equal and balanced. Each of the adjustable elastic screws 160 has an adjustable device 164. The adjustable device 164 is a washer in this embodiment. In another embodiment, the adjustable device 164 can be a spring. Each of the adjustable elastic screws 160 can be a screw with a spring, a spring screw, a screw with a washer, or a washer screw.

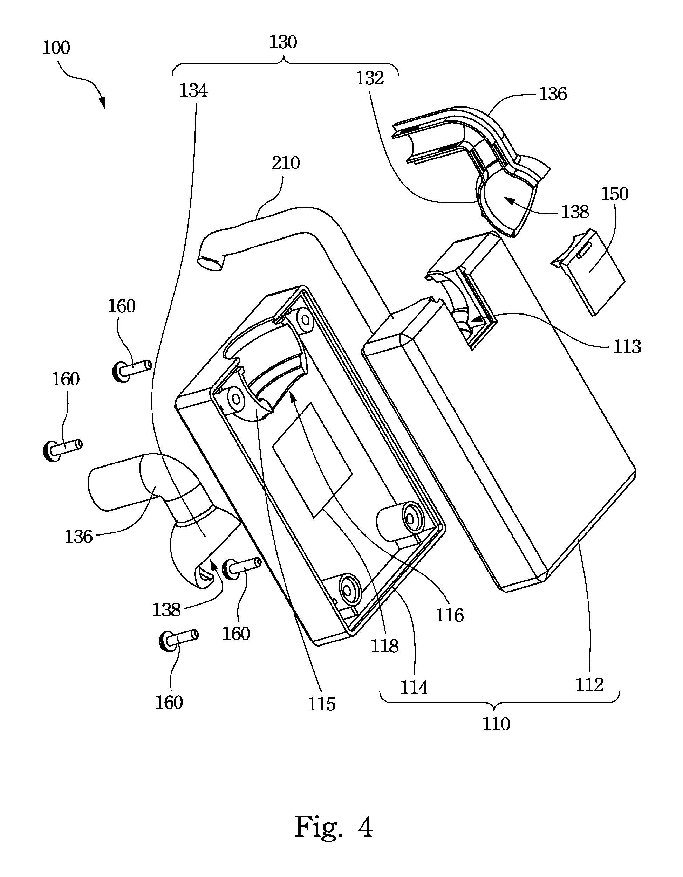

Refer to Fig. 4. Fig. 4 illustrates an explosion diagram of a second embodiment of the ball joint structure of the invention. The ball 130 has a first ball portion 132 and the second ball portion 134. The first ball portion 132 is coupled to the second ball portion 134 to form the ball 130. The ball 130 is a hollow structure. The ball 130 includes a connecting portion 136 exposed from the socket 110. The connecting portion 136 of the ball 130 is connected to a fixed end. The connecting portion 136 is a hollow structure. The ball 130 has a ball hole 138.

The socket 110 has an inner surface 115. The inner surface 115 of the socket 110 is curved and corresponds to the ball 130. The socket 110 has a socket hole 116. The first socket portion 112 has the containing opening 113. The cover 150 is disposed at the containing opening 113. A wire 210 is contained in the ball 130, which is the hollow structure. The wire 210 passes through the socket hole 116 and the ball hole 138. The angle of the socket hole 116 and the ball hole 138 is designed to allow the ball 130 to rotate related to the socket 110 but not be limited by the wire 210 within when there is an external force applied to the ball 130 for operating.

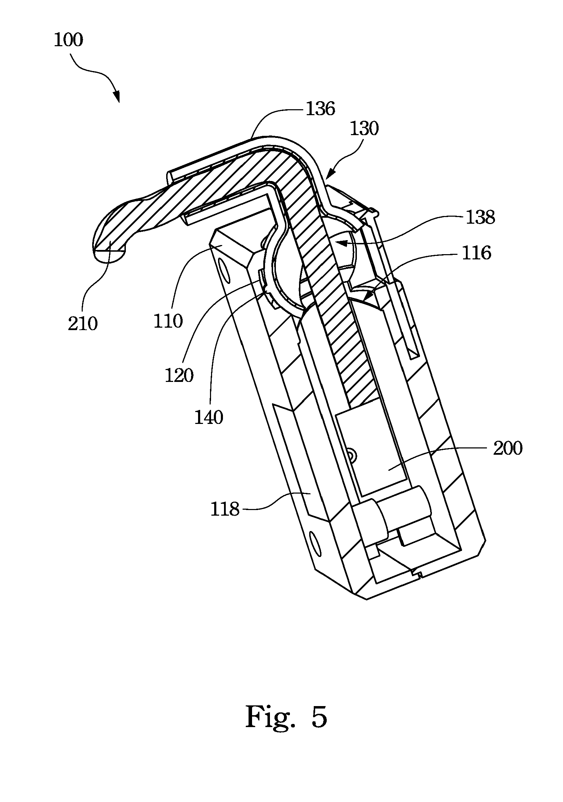

Refer to Fig. 5. Fig. 5 illustrates a sectional diagram of the second embodiment of the ball joint structure of the invention. The ball joint structure 100 can be utilized in a document projector. A camera 200 of the document projector is installed in the socket 110, and the wire 210 of the camera 200 passes through the socket hole 116 and the ball hole 138 and enters the connecting portion 136, which is connected to the fixed end, such as an arm of the document projector. The image signal taken by the camera 200 is sent to a processing unit of the document projector via the wire 210. The socket 110 has a transparent window 118 to expose the camera 200 disposed within.

The ball joint structure 100 further includes a stop mechanism to prevent the ball 130 from over-rotating and protects the wire 210 and the camera 200. The stop includes a concavity 120 disposed on the socket 110 and a protrusion 140 disposed on the ball 130. The concavity 120 is disposed at the inner surface of the socket 110. The protrusion 140 is disposed at an outer surface of the ball 130. The protrusion 140 is limited to be moved in the concavity 120 when the ball 130 is rotated relative to the socket 110, thus the rotating angle between the ball 130 and the socket 110 could be restricted by the stop mechanism.

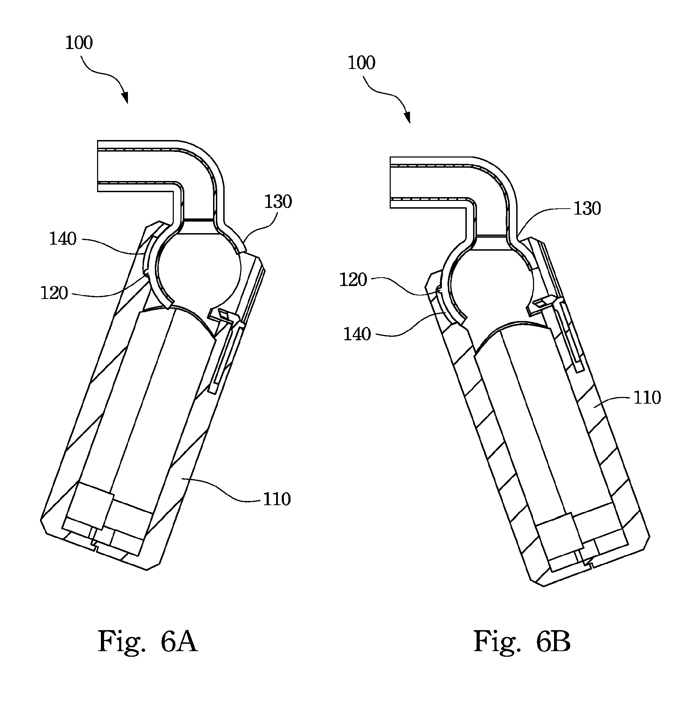

Refer to Fig. 6A and Fig. 6B simultaneously. Fig. 6A and Fig. 6B illustrate schematic diagrams of the stop mechanism of the ball joint structure in Fig. 5. The protrusion 140 is limited to be rotated in the concavity 120 when the ball 130 is rotated related to the socket 110, thus the rotating angle between the ball 130 and the socket 110 is restricted by the stop mechanism.

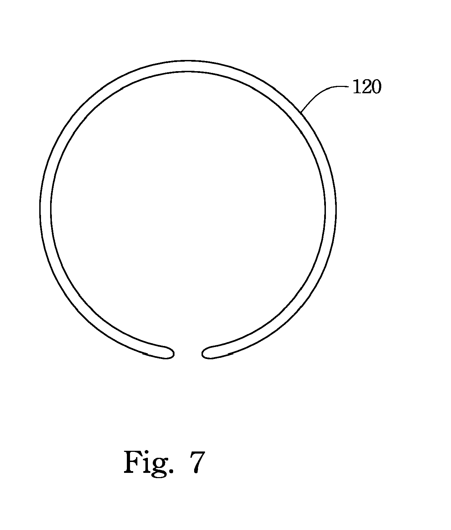

Refer to Fig. 7. Fig. 7 illustrates a top view diagram of the concavity of the stop mechanism in Fig. 6A. The concavity 120 is a belt concavity. The concavity 120 has two opposite ends, and each end is a closed end. Namely, the two ends of the concavity 120 do not contact with each other. A radian of the concavity 120 is smaller than 360 degrees. The relative rotation between the ball and the socket illustrated in Fig. 6A is limited by the concavity 120, wherein the relative rotation between the ball and the socket would be smaller than 360 degree.

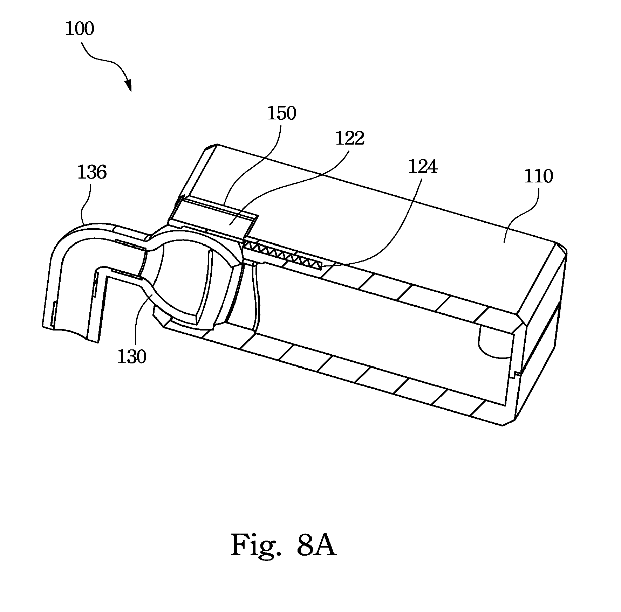

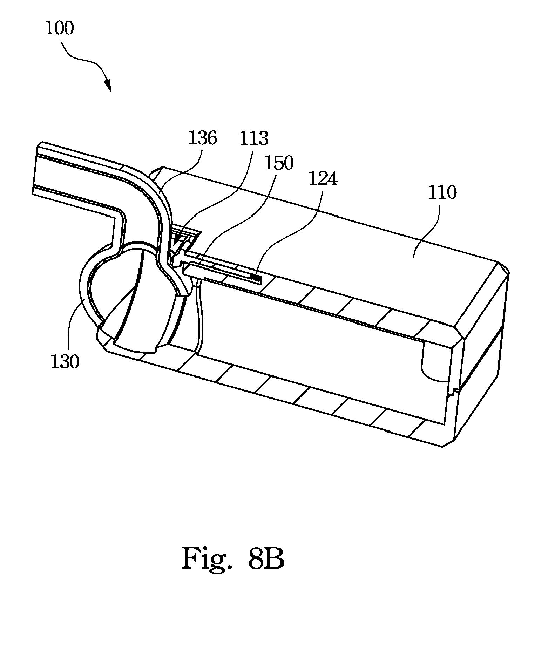

Refer to Fig. 8A and Fig. 8B simultaneously. Fig. 8A and Fig. 8B illustrate sectional diagrams of different operating states of a third embodiment of the ball joint structure of the invention. In this embodiment, the ball 130 can be pressed at the cover 150 and enters the containing opening 113 as shown in Fig. 8B. The socket 110 includes a cavity 122 disposed corresponding to the cover 150. The ball joint structure 100 includes plural springs 124 disposed in the cavity 122 to support the cover 150. The elastic force provided by the springs 124 is smaller than the friction force between the ball 130 and the socket 110. The elastic force provided by the springs 124 is utilized for supporting the cover 150 contacting to the ball, but not to hinder the relative rotation between the ball 130 and the socket 110.

Refer to Fig. 8A. The connecting portion 136 of the ball 130 touches the cover 150 when the ball 130 is relative rotated to the socket 110. Then, the connecting portion 136 of the ball 130 is pressed, and the cover 150 is pressed by the connecting portion 136. The cover 150 pressed by the connecting portion 136 is further slid into the cavity 122 of the socket 110, thus the ball 130 can be wide-angle rotated at the cover 150, as shown in Fig. 8B. The connecting portion 136 enters the containing opening 113.

The elastic force provided by the springs 124 is smaller than the friction force between the ball 130 and the socket 110, thus the relative angle between the ball 130 and the socket 110 would not be changed by the elastic force provided by the springs 124. Namely, the ball 130 would not be pushed by the springs 124. The ball 130 can be wide-angle rotated at the cover 150, and the connecting portion 136 is pushed and enters the containing opening 113.

The ball 130 can be lifted by the external force to make the connecting portion 136 depart from the containing opening 113. The cover 150 is pushed by the spring 124 disposed in the cavity 122 and touches the ball 130 as shown in Fig. 8A.

According to the embodiments of the invention, the wire is hid and protected in the ball joint structure. The ball can be wide-angle rotated at the cover. The stop mechanism is disposed inner the ball joint structure to reduce the space of the ball joint structure. The relative rotation between the ball and the socket is limited by the concavity of the stop mechanism. The ball is gripped in the socket by the equal and adjustable force provided by the adjustable elastic screws without other clamping devices.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims and their equivalents.

## Claims

1. A ball joint structure comprising:
a socket comprising:
a first socket portion comprising a containing opening, and
a second socket portion coupled to the first socket portion; a ball disposed in the socket comprising:
a first ball portion, and
a second ball portion coupled to the first ball portion; a cover disposed at the containing opening and touching the ball; and a plurality of adjustable elastic screws screwed on the socket, wherein
the ball is gripped in the socket with a force provided by the adjustable elastic screws.

2. The ball joint structure of claim 1, wherein the ball comprises a connecting portion exposed from the socket.

3. The ball joint structure of claim 2, further comprising a spring, wherein the socket comprises a cavity, and the spring is disposed in the cavity, wherein the cover is pressed and slid into the cavity when the connecting portion enters the containing opening.

4. The ball joint structure of claim 1, wherein the socket comprises a transparent window for exposing a camera disposed within.

5. A ball joint structure comprises:
a socket;
a ball disposed in the socket;
a plurality of adjustable elastic screws screwed on the socket, wherein the ball is gripped in the socket with a force provided by the adjustable elastic screws; and
a stop mechanism comprising:
a concavity disposed at an inner surface of the socket, and
a protrusion disposed at an outer surface of the ball, wherein the protrusion is moved in the concavity when the ball is rotated in the socket.

6. The ball joint structure of claim 5, wherein the concavity is a belt concavity having two opposite ends, and each end is a closed end.

7. The ball joint structure of claim 6, wherein a radian of the belt concavity is smaller than 360 degree.

8. The ball joint structure of claim 5, wherein the socket comprises a transparent window for exposing a camera disposed within.

9. A ball joint structure comprising:
a socket comprising a containing opening;
a ball disposed in the socket;
a cover disposed at the containing opening;
a protrusion disposed at an outer surface of the ball;
a concavity disposed at an inner surface of the socket, wherein the protrusion is moved in the concavity when the ball is rotated in the socket; and
a plurality of adjustable elastic screws screwed on the socket, wherein
the ball is gripped in the socket with a force provided by the adjustable elastic screws.

10. The ball joint structure of claim 9, wherein the ball comprises a connecting portion exposed from the socket.

11. The ball joint structure of claim 10, further comprising a spring, wherein the socket comprises a cavity, and the spring is disposed in the cavity, wherein the cover is pressed and slid into the cavity when the connecting portion enters the containing opening.

12. The ball joint structure of claim 11, wherein the concavity is a belt concavity having two opposite ends, and each end is a closed end.

13. The ball joint structure of claim 9, wherein the socket comprises a transparent window for exposing a camera disposed within.

14. The ball joint structure of claim 1, 5, or 9, wherein the ball comprises a connecting portion exposed from the socket.

15. The ball joint structure of claim 1, 5, or 9, wherein each adjustable elastic screw comprises an adjusting device, which is a spring or a washer.
